(19) Europäisches Patentamt
European Patent Office
Office européen des brevets

(11) **EP 4 678 618 A1**

(12) **EUROPEAN PATENT APPLICATION**
published in accordance with Art. 153(4) EPC

(43) Date of publication:
**14.01.2026 Bulletin 2026/03**

(21) Application number: **24766812.2**

(22) Date of filing: **15.02.2024**

(51) International Patent Classification (IPC):
$C04B\ 38/00^{(2006.01)}$    $B01D\ 69/00^{(2006.01)}$
$B01D\ 69/10^{(2006.01)}$    $B01D\ 69/12^{(2006.01)}$
$B01D\ 71/02^{(2006.01)}$    $C04B\ 35/111^{(2006.01)}$
$C04B\ 41/85^{(2006.01)}$

(52) Cooperative Patent Classification (CPC):
**B01D 69/00; B01D 69/10; B01D 69/12;
B01D 71/02; C04B 35/111; C04B 38/00;
C04B 41/85**

(86) International application number:
**PCT/JP2024/005267**

(87) International publication number:
**WO 2024/185441 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.03.2023 JP 2023036852**

(71) Applicant: **Sumitomo Chemical Company, Limited
Tokyo 103-6020 (JP)**

(72) Inventors:
• **MIYOSHI, Akinobu
  Niihama-shi, Ehime 792-8521 (JP)**
• **HARA, Syusaku
  Niihama-shi, Ehime 792-8521 (JP)**
• **NAITO, Shota
  Niihama-shi, Ehime 792-8521 (JP)**

(74) Representative: **Vossius & Partner
Patentanwälte Rechtsanwälte mbB
Siebertstrasse 3
81675 München (DE)**

(54) **POROUS CERAMIC LAYER, POROUS CERAMIC LAMINATE, AND SEPARATION MEMBRANE**

(57)    An object of the present invention is to provide a porous ceramic layer and a porous ceramic layered body in which when a functional layer is layered on top, the resistance of the functional layer can be small. The porous ceramic layer includes ceramic trabeculae and voids, wherein the porous ceramic layer has a non-porosis index, as represented by a Trabecular star volume (V*t) being a mean volume of volumes of the ceramic trabeculae in the range of from any point therein omnidirectionally to ends thereof, of 0.075 $\mu$m$^3$ or lower.

## Figure 1

: VOID
: TRABECULA

POINT $y_k$

REFERENCE POINT $x_i$

EP 4 678 618 A1

**Description**

Technical Field

The present invention relates to a porous ceramic layer, a porous ceramic layered body and a separation membrane.

Background Art

Porous ceramic bodies are used in various fields as membranes having functions of separation, concentration, filtration, and the like of fluids, either gas or liquid, such as microfiltration membranes, ultrafiltration membranes, nanofiltration membranes, reverse osmosis membranes, ion-exchange membranes and gas separation membranes.

For example, Patent Literature 1 discloses a ceramic filter in which a ceramic membrane having an $Al_2O_3$ content, modal diameter and maximum pore diameter in predetermined ranges is formed on the surface of an alumina substrate pipe having an $Al_2O_3$ content in a predetermined range, and which has a porosity of 35% or higher. Patent Literature 2 discloses a porous support provided with a substrate, an outermost surface layer and a support layer disposed between the substrate and the outermost surface layer and contacting with the outermost surface layer, wherein the ratio of the porosity of the outermost surface layer to the porosity of the support layer and the ratio of the thickness of the outermost surface layer to the thickness of the support layer are in predetermined ranges, and the Patent Literature also discloses the mean pore diameters of the substrate, the support layer and the outermost surface layer, and the mean particle diameters of particles constituting the substrate, the support layer, the outermost surface layer, and the like.

Citation List

Patent Literature

Patent Literature 1: Japanese Patent Laid-Open No. 2007-283219
Patent Literature 2: WO2017/169591

Summary of Invention

Technical Problem

By equipping a porous ceramic body with a functional layer as its outermost surface layer, the porous ceramic body can be used as a microfiltration membrane, an ultrafiltration membrane, a nanofiltration membrane, a reverse osmosis membrane, an ion-exchange membrane, a gas separation membrane, or the like, and at this time, it is desired that the resistance to fluid permeation in the functional layer is low.

An object of the present invention is to provide a porous ceramic layer and a porous ceramic layered body in which when a functional layer is layered on top, the resistance of the functional layer can be small.

Solution to Problem

The present invention having solved the above problems is as follows.

[1] A porous ceramic layer, comprising ceramic trabeculae and voids,
wherein the porous ceramic layer has a non-porosis index, as represented by a Trabecular star volume (V*t) being a mean volume of volumes of the ceramic trabeculae in the range of from any point therein omnidirectionally to ends thereof, of 0.075 $\mu m^3$ or lower.
[2] The porous ceramic layer according to [1], wherein the non-porosis index is 0.010 $\mu m^3$ or higher.
[3] A porous ceramic layered body, comprising a first porous layer and a second porous layer layered on a surface of the first porous layer,

wherein the pore diameter $D_{LD\text{-}max}$ (1) at which a value of a log differential pore volume measured in the pore diameter range of 0.0036 to 200 $\mu m$ of the first porous layer becomes maximum is larger than the pore diameter $D_{LD\text{-}max}$ (2) at which a value of a log differential pore volume measured in the pore diameter range of 0.0036 to 200 $\mu m$ of the second porous layer becomes maximum;

both the first porous layer and the second porous layer comprise a metal oxide; and

the second porous layer is the porous ceramic layer according to [1] or [2].

[4] The porous ceramic layered body according to [3], wherein the metal oxide comprises alumina.

[5] The porous ceramic layered body according to [3] or [4], wherein the porous ceramic layered body is tubular or monolithic.

[6] A separation membrane, comprising the porous ceramic layered body according to any one of [3] to [5].

[7] The separation membrane according to [6], wherein the second porous layer and a functional layer are layered.

Advantageous Effects of Invention

According to the porous ceramic layer and the porous ceramic layered body of the present invention, the resistance to permeation of a fluid through an outermost surface layer including a functional layer can be low. If the porous ceramic layer or the porous ceramic layered body of the present invention is used for solid-liquid separation in water treatment applications and the like, the resistance of a cake layer being a deposition layer of substances can also be low.

Brief Description of Drawing

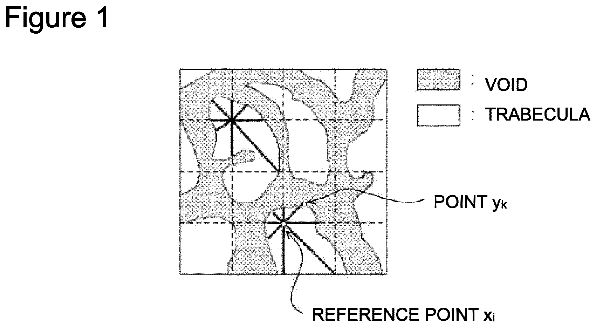

[Figure 1] Figure 1 is a diagram to interpret the measurement procedure of the non-porosis index of the present invention.

Description of Embodiments

(1) Porous ceramic layer

The porous ceramic layer of the present invention is constituted of ceramic trabeculae and voids. The voids are namely pores in the porous ceramic layer; and the pores usually are spread three-dimensionally in the porous ceramic layer. The pores are spread three-dimensionally can be said to be that the pores are indeterminate or that the pores are not linear. In the porous ceramic layer, the non-porosis index, as represented by a Trabecular star volume (V*t) being a mean volume of volumes of the ceramic trabeculae in the range of from any point therein omnidirectionally to ends thereof, is $0.075\ \mu m^3$ or lower. Pores are spread three-dimensionally under such a non-porosis index, which is preferable because it is possible to reduce the resistance and suppress defects, thereby preventing clogging of flow paths.

The non-porosis index in the present invention is evaluated using a Star Volume method which has been proposed as a method for estimating the degree of bone porosis in the human body. The Star Volume method is a parameter devised by a group of Gundersen et al. First, a porous ceramic layer is comparted at predetermined intervals in the X, Y and Z directions; and intersections thereof are taken as reference points $x_i$ (i= 1, 2, 3 ...), and a volume $x_i$ is determined for every reference point $x_i$. The volume $x_i$ is a volume of a portion drawn by points $y_k$ (k = 1, 2, 3 ...) where straight lines drawn omnidirectionally from the reference point $x_i$ intersect with the surface of a corresponding trabecula, in short, a volume in a range, without being obstructed by any void, viewable omnidirectionally from the reference point $x_i$. The Trabecular star volume (V*t) can be determined by determining volumes $x_i$ at all reference points $x_i$ and averaging them.

Figure 1 is a two-dimensional schematic diagram (source: http://oshiro.bpe.es.osaka-u.ac.jp/thesis/master/2005/katsuhara.pdf) of a porous ceramic layer constituted of ceramic trabeculae and voids, with a reference point $x_i$ and a point $y_k$ are added to the figure. As shown in Figure 1, straight lines drawn omnidirectionally from a reference point $x_i$ in a ceramic trabecula connect the reference point $x_i$ to a point $y_k$ (in Figure 1, one point is indicated as a typical point $y_k$) where the straight lines intersect with the surface of the ceramic trabecula. Although Figure 1 is a two-dimensional schematic diagram, in actual analysis, the analysis is carried out three-dimensionally; by connecting the points $y_k$, an outer peripheral surface of the ceramic trabecula is drawn. A volume of the ceramic trabecula inside the outer peripheral surface is the volume $x_i$.

The non-porosis index can be analyzed by taking a three-dimensional image using an image analysis software from images, observed by an electron microscope, of a plurality of cross-sections at predetermined intervals perpendicular to the thickness direction of a porous ceramic layer. As the FIB-SEM, for the pore diameter of 150 to 500 nm, a HELIOS600, manufactured by FEI Co. can be used; and for the pore diameter of 30 to 150 nm, a HELIOS G4. As the image analysis software, Avizo ver. 6.0, manufactured by Visualization Sciences Group, can be used. Observation of the cross-section perpendicular to the thickness direction using an electron microscope suffices if being carried out, in the case where the pore diameter by a mercury penetration method described later is 150 to 500 nm, at intervals of about 17 to 23 nm in the thickness direction; and in the case of the pore diameter of 30 to 150 nm, at intervals of about 7 to 13 nm in the thickness direction. The observation region of the cross-section suffices if a region enough to grasp the non-porosis index of the whole porous ceramic layer is suitably established; and HFW suffices when being, for example, 15 µm or larger. The image resolution may be, in the pore diameter of 150 to 500 nm, about 15 to 25 nm/pix in the X axis direction and the Y axis direction, and in the pore diameter of 30 to 150 nm, about 3 to 10 nm/pix in the X axis direction and the Y axis direction.

The intervals when the three-dimensional image of the porous ceramic layer is comparted in the X, Y and Z directions may be, in the case where the pore diameter by a mercury penetration method described later is 150 to 500 nm, about 15 to 25 nm/pix in any of the X axis direction, the Y axis direction and the Z axis direction, and in the case of the pore diameter of 30 to 150 nm, about 3 to 10 nm/pix in the X axis direction and the Y axis direction, and about 8 to 12 nm/pix in the Z axis direction. For analysis of an obtained three-dimensional image, a quantitative determination analysis software TRI/3D-BON-FCS, manufactured by Ratoc System Engineering Co. Ltd., can be used.

The non-porosis index is 0.075 µm$^3$ or lower; thereby, trabeculae meander sterically in the three-dimensional spaces and the skeletons are connected in a network form, whereby pores also range complicatedly in a three-dimensional manner and the resistance of a functional layer that is layered on the porous ceramic layer can be low. Further due to the fact that the non-porosis index is not more than the predetermined value, it has also such an effect that the bubble generation in a bubble point test can be suppressed. The non-porosis index is preferably 0.06 µm$^3$ or lower, more preferably 0.05 µm$^3$ or lower, still more preferably 0.04 µm$^3$ or lower and especially preferably lower than 0.04 µm$^3$. The non-porosis index is preferably 0.01 µm$^3$ or higher and more preferably 0.015 µm$^3$ or higher.

That is, the non-porosis index is preferably 0.01 to 0.075 µm$^3$, more preferably 0.015 to 0.06 µm$^3$, still more preferably 0.015 to 0.05 µm$^3$, further still more preferably 0.015 to 0.04 µm$^3$ and especially preferably 0.015 to lower than 0.04 µm$^3$.

The pore diameter of the porous ceramic layer as measured by a mercury penetration method is preferably 0.04 µm or larger, more preferably 0.1 µm or larger, still more preferably 0.13 µm or larger and further still more preferably 0.15 µm or larger, and then preferably 0.7 µm or smaller, more preferably 0.5 µm or smaller and still more preferably 0.4 µm or smaller. That is, the pore diameter is preferably 0.04 to 0.7 µm, more preferably 0.1 to 0.5 µm, still more preferably 0.13 to 0.4 µm and further still more preferably 0.15 to 0.4 µm. The pore diameter means a pore diameter giving a peak in a graph with the abscissa indicating the pore diameter and the ordinate indicating the log differential pore volume.

(2) Porous ceramic layered body

The present invention includes a porous ceramic layered body having a first porous layer and a second porous layer layered on a surface of the first porous layer, wherein the pore diameter $D_{LD-max}$ (1) at which a value of a log differential pore volume measured in the pore diameter range of 0.0036 to 200 µm of the first porous layer becomes maximum is larger than the pore diameter $D_{LD-max}$ (2) at which a value of a log differential pore volume measured in the pore diameter range of 0.0036 to 200 µm of the second porous layer becomes maximum; both the first porous layer and the second porous layer contain a metal oxide; and the second porous layer is the above-mentioned porous ceramic layer of the present invention. Here, the log differential pore volume is a value represented by dV/d(logD) where V denotes the pore volume; D denotes the pore diameter; dV denotes the difference value in pore volume between measurement points; and d(logD) denotes the difference value in logarithm of the pore diameter. The log differential pore volume can be measured by a mercury penetration method.

The above-mentioned "layered on a surface of the first porous layer" refers to the fact that the first porous layer and the second porous layer may be adjacently layered (that is, without interposition of another layer), or a third porous layer may be interposed between the first porous layer and the second porous layer. The third porous layer may have a plurality of layers. In the case where the first porous layer and the second porous layer are adjacently layered, as long as some portions of the second porous layer contact with the first porous layer, the rest portions thereof may be layered on the first porous layer through the air present owing to pores present on a surface of the first porous layer. Portions where the second porous layer and the first porous layer are in contact with each other may be pore portions of the pores present on a surface of the first porous layer.

The shape of the porous ceramic layered body is not especially limited, and includes, for example, platy, tubular and monolithic ones; and especially preferable is a tubular or monolithic one. Here, the monolithic shape means a columnar shape (cylindrical one, prismatic one, cylindroid one or the like) having a plurality of through-holes in the axial direction. In the case where the porous ceramic layered body is tubular, the second porous layer is formed preferably only on the inner peripheral surface of the tube, only on the outer peripheral surface thereof, or on both surfaces thereof, more preferably only on the inner peripheral surface thereof or only on the outer peripheral surface thereof, and still more preferably only on the inner peripheral surface thereof. In the case where the porous ceramic layered body is monolithic, it is preferable that the second porous layer is formed only on the inner surfaces of each of the through-holes of the monolithic shape.

The thickness (mean value) of the porous ceramic layered body is, for example, 450 to 10,000 µm, and more preferably 500 to 6,000 µm. The thickness in the case where the porous ceramic layered body is monolithic may be a mean value of nearest distances between adjacent through-holes in planes perpendicular to the longitudinal axis. The length in the longitudinal direction of the porous ceramic layered body is, for example, 50 to 5,000 mm. The length in the longitudinal direction means, for example, in a platy case, the length of a long side, and in a tubular or monolithic case, the length in the longitudinal axis direction.

The porous ceramic layered body of the present invention, having the porous ceramic layer having a non-porosis index of not more than the predetermined value, preferably gives an acceptance rate of 2/3 to 3/3 in an evaluation of defects by a bubble point method shown in Examples described later.

(2-1) First porous layer

The pore diameter at the peak of the log differential pore volume of the first porous layer, that is, the pore diameter $D_{LD-max}$ (1) at which the value of the log differential pore volume becomes maximum, is preferably in the range of 5 to 25 $\mu$m, more preferably 5 to 20 $\mu$m, still more preferably 5 to 15 $\mu$m and most preferably 5 to 12 $\mu$m, within the pore diameter range of 0.0036 to 200 $\mu$m.

The thickness of the first porous layer is preferably 400 to 8,000 $\mu$m.

The first porous layer contains a metal oxide, and the metal oxide is, for example, at least one selected from the group consisting of $Li_2O$, $BeO$, $B_2O_3$, $Na_2O$, $MgO$, $Al_2O_3$, $SiO_2$, $K_2O$, $CaO$, $ScO_2$, $TiO_2$, $V_2O_5$, $Cr_2O_3$, $ZnO$, $Ga_2O_3$, $GeO_2$, $As_2O_5$, $Rb_2O$, $SrO$, $Y_2O_3$, $ZrO_2$, $Nb_2O_5$, $Ag_2O$, $CdO$, $In_2O_3$, $SnO_2$, $Sb_2O_5$, $TeO_2$, $Cs_2O$, $BaO$, $La_2O_3$, $Ta_2O_5$, $WO_3$, $HgO$, $Tl_2O$, $PbO$, $PbO_2$ and $ThO_2$. It is preferable that at least one of $Al_2O_3$, $ZrO_2$, $MgO$, $Cr_2O_3$ and $Y_2O_3$ is contained; and it is more preferable that $Al_2O_3$ is contained. It is more preferable that the first porous layer contains $Al_2O_3$ and one or more metal oxides other than $Al_2O_3$. The one or more metal oxides other than $Al_2O_3$ preferably contained in the first porous layer can be optionally selected from metal oxides exemplified in the above, and the first porous layer is especially preferably a glass containing $Al_2O_3$ and $SiO_2$. Here, the "metal" in the present description is also used in a meaning including semimetals such as Si.

(2-2) Second porous layer

The pore diameter at the peak of the log differential pore volume of the second porous layer, that is, the pore diameter $D_{LD-max}$ (2) at which the value of the log differential pore volume becomes maximum, is preferably in the range of 0.01 to 5 $\mu$m, more preferably 0.01 to 1 $\mu$m, still more preferably 0.01 to 0.7 $\mu$m, further still more preferably 0.05 to 0.5 $\mu$m and most preferably 0.1 to 0.4 $\mu$m, within the pore diameter range of 0.0036 to 200 $\mu$m.

The thickness of the second porous layer is preferably 3 to 300 $\mu$m. The thickness of the second porous layer can be determined by the following procedure. First, a cross-section parallel to the layering direction of the first porous layer and the second porous layer is fabricated and an image of the cross-section is taken. In the image, an image was taken so that the total length of the surface of the second porous layer on the first porous layer side becomes 10 times or more the $D_{LD-max}$ (1) of the first porous layer; and the length from the interface between the second porous layer and the first porous layer to the interface of the second porous layer on the opposite side to the first porous layer was measured. Then, in the case where the interface of the second porous layer undulated, a tangential line at the mountain peak of the undulation in the image was drawn parallelly to the longitudinal direction, and a tangential line at the valley peak thereof was drawn parallelly to the longitudinal direction; and a space between the two lines was bisected and a center line parallel to the two lines was drawn. The center line was regarded as the interface and the thickness was measured. Also for the interface of the second porous layer on the opposite side to the first porous layer, in the case where the interface of the second porous layer undulated, a tangential line at the mountain peak of the undulation in the image was drawn parallelly to the longitudinal direction, and a tangential line at the valley peak thereof was drawn parallelly to the longitudinal direction; and a space between the two lines was bisected and a center line parallel to the two lines was drawn, and the center line was regarded as the interface.

The second porous layer also contains a metal oxide, and the metal oxide may include the same ones exemplified as metal oxides in the first porous layer. The second porous layer preferably contains, as the metal oxide, at least one of $Al_2O_3$, $ZrO_2$, $MgO$, $Cr_2O_3$ and $Y_2O_3$, and more preferably contains $Al_2O_3$; and the content rate of $Al_2O_3$ in the metal oxide is preferably 80% by mass or higher and more preferably 90% by mass or higher. It is still more preferable that both the first porous layer and the second porous layer contain $Al_2O_3$.

(3) Methods for producing the porous ceramic layer and the porous ceramic layered body

The porous ceramic layer of the present invention is not especially limited as long as the non-porosis index can be regulated in the range of the present invention, but the porous ceramic layer can be produced by preparing a slurry containing inorganic particles in which the aspect ratio corresponding to cumulative 50% based on volume, AR50, is 1.8 to 2.7; (AR90 - AR10)/AR50 is 0.67 or higher and 1.0 or lower; and AR90 is 3.00 or higher and 4.00 or lower, and coating the slurry on a substrate and heat treating it. The AR (numerical value) mentioned herein is a parameter related to a distribution of the aspect ratio obtained in three-dimensional particle shape analysis described later. Even in the case where the particles have aspect ratio corresponding to cumulative 50%, AR50, within a certain range, presence of high-aspect ratio particles in a certain proportion enables production of the porous ceramic layer of the present invention having a low non-porosis index. The aspect ratio, as shown in Examples described later, can be calculated by three-dimensional particle shape analysis.

With regard to the inorganic particles as described above, (i) commercially available inorganic particles, such as CR-6 and CR-15, manufactured by Baikowski International Corp., may be used; (ii) inorganic particles, prepared by heat treating a mixture of particles obtained by mixing boehmite, $AlF_3$ powder, and $\alpha$-alumina seed crystals having various grain shapes, may be used; or (iii) inorganic particles of 1 to 3 $\mu$m in a particle diameter and 10 to 20 $m^2$/g in a BET specific surface area may be crushed by a ball mill and used. Here, the particle diameter in the present description refers to a diameter corresponding to cumulative 50% based on volume measured by a method described later.

In the above (ii), the content of $AlF_3$ is preferably increased in the range of 0.1% by mass or higher and 2.7% by mass or lower (0.1 to 2.7% by mass), more preferably 0.11% by mass or higher and 2.0% by mass or lower (0.11 to 2.0% by mass) and still more preferably 0.12% by mass or higher and 1.5% by mass or lower (0.12 to 1.5% by mass). By controlling the content of $AlF_3$ within this range, anisotropic growth of particles is promoted and the aspect ratio can thereby be made high and controlled to a predetermined distribution of the aspect ratio. With regard to the mean particle diameter of the $\alpha$-alumina seed crystals, a mixture thereof in the range of, for example, 0.1 to 0.5 $\mu$m in particle diameter can be used; and by increasing, in the range of 40% by mass or lower and 0.01% by mass or higher, the amount of the $\alpha$-alumina seed crystals to be added, the particle diameter of the resulting particles can be controlled in the range of 0.1 to 3 $\mu$m. The heat treatment of the mixture of particles is carried out at 750 to 1,800°C in a closed pressure vessel. The higher the treatment temperature, the lower the aspect ratio becomes, so by controlling the temperature within the above range, particles having a predetermined aspect ratio distribution can be obtained. The calcination time is, from the viewpoint of promoting the particle growth, preferably 1 hour or longer and 100 hours or shorter and more preferably 12 hours or longer and 48 hours or shorter. After the heat treatment, the alumina particles obtained may be subjected to disintegration treatment to loosen aggregation of the particles. Examples of methods for disintegrating particles include a method using a ball mill.

As described in the above (iii), particles having a suitable BET specific surface area in comparison of the particle diameter are easily crushed and suitable crushing thereof can regulate the aspect ratio distribution. The crushing condition vary depending on the inorganic particles to be used, but for example, in the case of crushing $\alpha$-alumina using ball mill, the ball size is 2 to 10 mm and more preferably 4 to 7 mm. In the case of the ball size of smaller than 2 mm, since the crushing is carried out excessively, the aspect ratio of the particles becomes uniform and therefore the aspect ratio distribution cannot be controlled within a predetermined range; and in the case of 10 mm or larger, the crushing becomes insufficient and the aspect ratio distribution cannot be controlled. The crushing time by a ball mill is 1 to 20 hours, and more preferably 3 to 15 hours and still more preferably 8 to 12 hours. In the case where the crushing time by a ball mill is shorter than 1 hour, the crushing becomes insufficient and the aspect ratio distribution cannot be controlled; and in the case of 20 hours or longer, since the crushing is carried out excessively, the aspect ratio of the particles becomes uniform and therefore, the aspect ratio distribution cannot be controlled within a predetermined range.

The inorganic particles contained in the slurry are preferably of a metal oxide; and the metal oxide may include the same ones as metal oxides exemplified in the first porous layer. The metal oxide contained in the slurry can be selected from above examples of metal oxides contained in the porous ceramic layered body of the present invention, and it is preferable that particularly at least one of $Al_2O_3$, $ZrO_2$, $MgO$, $Cr_2O_3$ and $Y_2O_3$ is contained; and it is more preferable that $Al_2O_3$ is contained. The content rate of $Al_2O_3$ in the metal oxide contained in the slurry is preferably 80% by mass or higher and more preferably 90% by mass or higher. The concentration of the metal oxide in the slurry is, for example, 2% by mass or higher and 15% by mass or lower (2 to 15% by mass), and preferably 4% by mass or higher and 13% by mass or lower (4 to 13% by mass). The metal oxide to be contained in the slurry may be a hydrate of the metal oxide.

It is preferable that the slurry contains, in addition to the metal oxide, a solvent and a thickener.

The solvent includes water and organic solvents.

The thickener includes methylcellulose, hydroxyethylmethylcellulose, hydroxyethylcellulose, hydroxypropylmethylcellulose, polyalkylene oxides, polyvinyl alcohols, sodium polyacrylate, polyvinylpyrrolidone, polyacrylamide, polydimethylaminoethyl methacrylate, and the like; and use of hydroxypropylmethylcellulose is especially preferable. The concentration of the thickener in the slurry is, for example, 0.5% by mass or higher and 5% by mass or lower (0.5 to 5% by mass), and preferably 1% by mass or higher and 3% by mass or lower (1 to 3% by mass).

It is also preferable to regulate the cooling condition when the thickener is dissolved in a solvent, and it is preferable to cool the mixture to 3°C or higher and 10°C or lower, and stir the mixture for 10 min or longer and shorter than 1 hour. Since the cooling promotes the dissolution of the thickener and atomizes the thickener, the pore-creating action by undissolved residues of the thickener can regulate the non-porosis index.

The diameter corresponding to cumulative 50% based on volume of the inorganic particles contained in the slurry is preferably 0.1 to 3 $\mu$m. The diameter corresponding to cumulative 50% can be measured by a laser diffraction/scattering particle size distribution analyzer.

Methods for coating the slurry on a substrate include dip coating, spray coating, roll coating, bar coating, spin coating, slit coating, brush coating, and the like. After the coating of the slurry, by heat treating the coated slurry, the porous ceramic layer can be formed; and the heat treatment temperature is, for example, 1,000°C or higher and 1,500°C or lower, and the heat treatment time is, for example, 1 hour or longer and 8 hours or shorter.

As the substrate on which the slurry is to be coated, the substrate (first porous layer) having a higher $D_{LD-max}$ than the porous layer (second porous layer) formed from the slurry and containing the metal oxide is used; after subjecting the substrate to a water and oil repellent treatment, the slurry is coated and heat treated, whereby the porous ceramic layer (second porous layer) of the present invention can be formed on the substrate and the porous ceramic layered body of the present invention can be produced.

By subjecting the first porous layer to the water and oil repellent treatment and coating the surface having been subjected to the water and oil repellent treatment with the slurry, it is possible to prevent the slurry from entering pores of the substrate. Methods for the water and oil repellent treatment include spray coating, dip coating, bar coating, suction coating, ultrasonic spraying, brush coating, squeegee coating, spray coating, and the like. The compositions of a water repellent agent and an oil repellent agent are not limited, and for example, a paraffin-based water and oil repellent agent, a fluorine-based water and oil repellent agent, and a polysiloxane-based water and oil repellent agent can be used. The fluorine-based water and oil repellent agent includes an agent having a perfluoroalkyl group or a perfluoropolyether structure, or the like.

As the first porous layer, a porous body having a $D_{LD-max}$ (1) of, for example, the above-mentioned first porous layer and having a metal oxide can be used; and preferable metal oxides may be referred to ones in the description of the first porous layer. As such a substrate, for example, a commercially available substrate containing alumina and $SiO_2$, such as an alumina substrate, A-13, manufactured by Hagi-Glass Art Studio LLC, can be used.

(4) Separation membrane

The porous ceramic layered body of the present invention can be used as a microfiltration membrane, an ultrafiltration membrane, or a nanofiltration membrane; and as required, the porous ceramic layered body is layered further with a functional layer, and can be used as a microfiltration membrane, an ultrafiltration membrane, a nanofiltration membrane, a reverse osmosis membranes, an ion-exchange membrane, or a separation membrane of gases, etc. In the separation membrane, it is preferable that the second porous layer of the porous ceramic layered body of the present invention and the functional layer are layered, and it is more preferable that the second porous layer and the functional layer are directly layered.

The functional layer includes zeolite, MOF (Metal Organic Frameworks), porous silica membrane, porous alumina membrane, and the like.

A liquid containing inorganic particles or MOF to constitute the functional layer is coated on the surface of the second porous layer of the porous ceramic layered body of the present invention, and heat treated, whereby the separation membrane equipped with the functional layer can be produced. The heat treatment condition can suitably be selected according to the functional layer to be layered, and the separation membrane can be produced by the heat treatment, for example, at 80 to 800°C for 1 to 10 hours. The amount of the inorganic particles or MOF in the liquid containing the inorganic particles or MOF to constitute the functional layer is made to be preferably 1 to 10% by mass.

(5) Resistance of the functional layer

According to the porous ceramic layer and the porous ceramic layered body of the present invention, the resistance of the functional layer that is layered thereon can be low.

The present application claims the benefit of priority based on Japanese Patent Application No. 2023-36852, filed on March 9, 2023. The entire content of the description of Japanese Patent Application No. 2023-36852, filed on March 9, 2023, is hereby incorporated by reference into this application.

Examples

Hereinafter, the present invention will be described in more detail below by means of Examples. The present invention is not limited by the following Examples, and of course, can also be carried out with appropriate modifications, which are made within the scope of the above-mentioned and below-mentioned gist, and any of these modifications are included in the technical scope of the present invention.

Example 1

As a first porous layer, an alumina substrate A-13 containing alumina and $SiO_2$, manufactured by Hagi-Glass Art Studio LLC, was used. The substrate A-13 was in a cylindrical shape having an inner diameter of 7.2 mm, an outer diameter of 9.8 mm and a length of 9.75 cm. The substrate A-13 was dipped in a water repellent agent SH Conc, manufactured by The Columbus Co. Ltd., and dried. Then, an alumina powder CR-6, manufactured by Baikowski International Corp., and a hydroxypropylmethylcellulose 65SH-30000, manufactured by Shin-Etsu Chemical Co. Ltd., as a thickener were mixed in water at a concentration of 4% by weight and 1.05% by weight, respectively, to prepare a slurry. When the alumina powder CR-6 and the hydroxypropylmethylcellulose were added to water and the mixture was stirred for 30 min or longer to dissolve the hydroxypropylmethylcellulose, and then cooled to 5°C. The upper end and the lower end of the substrate A-13 were sealed to keep the slurry off from entering the inner peripheral surface of the substrate A-13, and then the substrate A -13 was dip coated with the slurry. Thereafter, the substance A-13 whose outer peripheral surface had been coated with the slurry was heat treated at 1,200°C for 3 hours to obtain a porous ceramic layered body.

Coating of a functional layer on the porous ceramic layered body obtained by coating and calcining the CR-6 on the A-13 was carried out by coating a boehmite sol and heat treating the resultant at 600°C for 3 hours. The boehmite sol used was an Alumina Sol-10A, manufactured by Kawaken Fine Chemical Co. Ltd., and was prepared so that the boehmite concentration became 2% by weight.

Example 2

A porous ceramic layered body and a layered body having a functional layer further layered thereon were fabricated by the same method as in Example 1, except for using CR-15, manufactured by Baikowski International Corp., as the alumina powder.

Example 3

A porous ceramic layered body and a layered body having a functional layer further layered thereon were fabricated by the same method as in Example 1, except that an alumina 1 was used, which was obtained by crushing alumina particles having a particle diameter of 2.7 $\mu$m and a BET specific surface area of 13.2 $m^2$/g synthesized by an alkoxide method using a ball mill. The ball milling was carried out for 10 hours with a ball size of 5 mm.

Comparative Example 1

A porous ceramic layered body and a layered body having a functional layer further layered thereon were fabricated by the same method as in Example 1, except for using AKP-20, manufactured by Sumitomo Chemical Co. Ltd., as the alumina powder, and not carrying out the cooling when dissolving the hydroxypropylmethylcellulose.

(1) Measurement of the non-porosis index

The non-porosis index of the porous ceramic layered body can be evaluated by using an FIB-SEM. An apparatus therefor was not limited, but the evaluation can be performed using an FIB-SEM (HELIOS 600, manufactured by FEI Co.).

First, the porous ceramic layered body was impregnated with an epoxy resin to fill voids of the porous layers; thereafter, the epoxy resin was cured to fabricate a sample. After curing, the sample was cut so that a cross-section of the layer (the second porous layer, hereinafter, referred to as the alumina middle layer in some cases) which had been formed from the slurry containing the alumina powder impregnated with the epoxy resin became a surface layer of the sample. After cutting, an observation surface perpendicular to the thickness direction of the porous ceramic layer was fabricated by irradiating the surface layer of the sample with FIB (Focused Ion Beam) toward the depth direction (direction toward the sample interior) by using an FIB-SEM (HELIOS 600, manufactured by FEI Co.). At this time, the FIB processing was carried out from a surface close to the surface of the alumina middle layer, in an area as close as possible to the surface of the porous ceramic layered body, until porous structures were observed over an entire observation region. When the pore diameter was 150 to 500 nm, the observation region was set at HFW = 19.7 $\mu$m and the image resolution was set at X, Y = 19.2 nm/pix; and when the pore diameter was 30 to 150 nm, the observation region was set at HFW = 10.6 $\mu$m and the image resolution was set at X = 7 nm/pix and Y = 9 nm/pix.

SEM observation (reflected electron image) at an acceleration voltage of 2.1 kV was carried out on the obtained observation surface. After the above SEM observation, a fresh observation surface was fabricated by FIB processing in the thickness direction of the alumina middle layer (thickness), and SEM observation (reflected electron image) was carried out on the fresh observation surface. When the pore diameter was 150 to 500 nm, the FIB processing was carried out by a thickness of 20 nm; and when the pore diameter was 30 to 150 nm, the FIB processing, by a thickness of 10 nm, to further fabricate a fresh observation surface. Then SEM observation (reflected electron image) was further carried out on the fresh surface. By repeatedly thus carrying out the FIB processing in intervals of 20 nm or 10 nm in thickness and the SEM observation of the observation surfaces until areas where porous structures could be observed over entire observation regions, continuous sliced imaged were taken throughout the entire thickness direction of the porous body. Then, it was confirmed from the obtained sliced images that pores spread three-dimensionally.

Then, a positional correction was made by using an image analysis software (Avizo ver. 6.0, manufactured by Visualization Sciences Group) to obtain continuous sliced images after the correction. The scale was set, when the pore diameter was 150 to 500 nm, at X, Y = 19.2 nm/pix and Z axis 20 nm/pix; and when the pore diameter was 30 to 150 nm, the scale was set at X = 7 nm/pix, Y = 9 nm/pix and Z axis 10 nm/pix. The obtained continuous sliced images were trimmed to a size of about 18 $\mu$m × 9 $\mu$m × a thickness observed, and a three-dimensional quantitative analysis of voids in the alumina middle layer was performed.

The three-dimensional quantitative analysis used a quantitative analysis software TRI/3D-BON-FCS (manufactured by Ratoc System Engineering Co. Ltd.). Specifically, the above software was opened and the binary gradation of the image was carried out by Auto-LW to distinguish between alumina portions and void portions constituting the porous layer. An analysis was made on the void portions distinguished by the above processing, using a 3D trabecular bone measurement by a bone measuring option of the software under the conditions of analysis directions of XY, a MIL effective length of 0.5 × Thickness, an NdNd effective length of 1.5 × Thickness and an NdTm effective length of 2.0 × Thickness. Among parameters of trabecular portions of the porous body output at this time, Star Volume = V*m indicating the non-porosis index was used. The Star Volume V*m obtained by the measurement corresponds to the non-porosis index V*t specified in the present invention, and indicates straightness of skeletons as a structural body of the alumina portions; and a low numerical value of the Star Volume indicates many alumina portions being blocked by the voids and the alumina portions meandering.

(2) Evaluation of the resistance of the functional layer

The resistance of the functional layer was calculated from the difference in resistance between the porous ceramic layered body before and after layering of the functional layer using the series resistance model. First, air was made to flow at a constant flow rate of 0.5 m³/h from the outside of the porous ceramic layered body sample before the functional layer was layered, and was allowed to pass through in the axis direction of the sample; and the pressure difference before and after permeation in the sample was measured. Then, the pressure difference before and after permeation in the porous ceramic layered body sample after layering of the functional layer, that is the porous ceramic layered body sample on which the functional layer is layered, was similarly measured. Separately, the pressure difference in the case where the measuring apparatus had no sample was measured.

By using the pressure difference of the porous ceramic layered body sample before the layering of the functional layer and the pressure difference in the case of no sample, the resistance of the porous ceramic layered body sample before the layering of the functional layer was calculated by the following expression (1). Similarly, by using the pressure difference of the porous ceramic layered body sample after the layering of the functional layer and the pressure difference in the case of no sample, the resistance of the porous ceramic layered body sample after the layering of the functional layer was calculated by the following expression (1).

[Expression 1]

$$
\text{Resistance } (\text{m}^2 \cdot \text{sec} \cdot \text{Pa} / \text{mol}) = \frac{\{\text{a pressure difference in measurement of a sample (Pa)} - \text{a pressure difference in measurement with no sample (Pa)}\} \times \text{a membrane area (m}^2)}{\text{a flow rate } (\text{m}^3/\text{h}) / 3600 / 0.0224}
$$

$\cdots$ Expression (1)

By subtracting the resistance of the porous ceramic layered body sample before the layering of the functional layer from the resistance of the porous ceramic layered body sample after the layering of the functional layer, an apparent resistance of the functional layer was acquired.

(3) Method for evaluating defects

The evaluation of defects was carried out by using a bubble point method. Jigs were attached on both ends of the cylindrical porous ceramic layered body sample (before layering of the functional layer), and the sample was sunk in water. Thereafter, air at 0.15 MPa was enclosed inside the sample, and the case where at this time, no air bubbles were generated from the sample was taken as acceptable. Here, the test was carried out on three samples fabricated under the same conditions.

(4) Measurement of the pore diameter by a mercury penetration method

First, a sample was dried at 120°C for 4 hours, and thereafter the pore diameter was measured by a mercury penetration method using an AutoPore V9600 (manufactured by Micromeritics Instrument Corp.).

The details of the measurement condition are as follows.

Adv. Contact Angle: 140.0°
Rec. Contact Angle: 140.0°
Mercury Temperature: 21°C
Sample Mass: 1.0 g
Assembly Mass: 1.0 g
Penetrometer Volume: 1.0 mL
Penetrometer Mass: 1.0g
Report Range: 1.07 to 59,256.30 psia

Specifically, the substrate A-13 having the second porous layer formed thereon was measured, and the pore diameter giving a peak was evaluated from a graph with the abscissa indicating the pore diameter and the ordinate indicating the log differential pore volume. Further, in the present measurement, only the substrate A-13 corresponded to the first porous layer was also measured. In log differential pore volume distributions with the abscissa indicating the pore diameter, in the measurement of only the substrate A-13, one peak was observed; and in the measurement of the substrate A-13 having the second porous layer formed thereon, two peaks were observed. The $D_{LD-max}$ of the first porous layer was evaluated from the peak observed in the observation of only the substrate A-13; and the $D_{LD-max}$ of the layer (second porous layer) formed from the slurry was evaluated from the peak on the smaller pore diameter side among the two peaks observed in the measurement of the substrate A-13 having the second porous layer formed thereon. Here, the pore distribution was evaluated in the pore diameter range of 0.0036 to 200 $\mu$m.

(5) Measurement of the thickness of the second porous layer

The cylindrical porous ceramic layered body was divided by a plane parallel to the longitudinal direction and passing through the center of the cylinder, embedded in a resin, and polished to expose a cross-section parallel to the axis direction; and the cross-section was observed by a scanning electron microscope (SEM). An image was taken so that the total length of the surface of the second porous layer on the first porous layer side became 110 $\mu$m or longer in the axial-direction (that is, 10 times or more the $D_{DL-MAX}$ (1) of the first porous layer). The length from the interface between the second porous layer and the first porous layer to the interface of the second porous layer on the opposite side to the first porous layer was measured, and was taken as the thickness of the second porous layer. Then, in the case where the interface of the second porous layer undulated, a tangential line at the mountain peak of the undulation in the image was drawn parallelly to the longitudinal direction, and a tangential line at the valley peak thereof was drawn parallelly to the longitudinal direction; and a space between the two lines was bisected and a center line parallel to the two lines was drawn. The center line was regarded as the interface and the thickness was measured. Also for the interface of the second porous layer on the opposite side to the first porous layer, in the case where the interface of the second porous layer undulated, a tangential line at the mountain peak of the undulation in the image was drawn parallelly to the longitudinal direction, and a tangential line at the valley peak thereof was drawn parallelly to the longitudinal direction; and a space between the two lines was bisected and a center line parallel to the two lines was drawn, and the center line was regarded as the interface.

(6) Measurement of the particle size distribution

For the alumina used in Examples and Comparative Example, the particle size distribution was measured by using a laser diffraction/scattering particle size distribution analyzer (Microtrac MT3000II, manufactured by MicrotracBell Corp., 0.2% by weight sodium hexametaphosphate aqueous solution), and the diameter corresponding to cumulative 50% based on volume was measured.

(7) Measurement of the distribution of the aspect ratio

2 parts by weight of a dispersant and 2 parts by weight of the alumina particle powder were dispersed in 100 parts by weight of an epoxy resin, and vacuum deaerated; thereafter, 12 parts by weight of a curing agent was charged, and the obtained alumina-dispersed epoxy resin was poured and cured in a silicone mold.
The cured sample was fixed on a sample table, and then vapor deposited with Pt-Pd, and set on an FIB-SEM (HELIOS 600, manufactured by FEI Co., Japan Ltd.); and a cross-section was fabricated by FIB processing at an acceleration voltage of 30 kV; and the cross-section was SEM observed at an acceleration voltage of 2.1 kV. After the observation, a fresh cross-section was further fabricated by FIB processing by a thickness of 50 nm in the sample depth direction and the cross-section was SEM observed. The FIB processing and the cross-section SEM observation were repeated at regular intervals of 50 nm to take 100 or more continuous images; and positional correction was made thereon by an image analysis software (Avizo ver. 6.0) to obtain continuous sliced images. The scale was made to be 50 nm/pix in the X, Y and Z axes. A three-dimensional quantitative analysis of the alumina particle was carried out on the obtained continuous sliced images and the aspect ratio of the particle was calculated. The three-dimensional quantitative analysis used a quantitative analysis software TRI/3D-PRT (manufactured by Ratoc System Engineering Co. Ltd.).

In the three-dimensional quantitative analysis, first, one of the continuous sliced images was opened on the TRI/3D-PRT; a median filter was applied to remove noises; then, each three-dimensionally individual particle was identified and labeled, and thereafter, particles discontinued on the measuring region periphery were deleted.

For 100 or more remaining particles not deleted by the above process, the length of the major axis in the direction in which the major axis was the longest among spheroids obtained by revolving each particle was represented by a; the length in the minor axis direction orthogonal to the major axis direction was represented by c; and the value obtained by dividing a by c, that is, a/c = the aspect ratio, was calculated. The aspect ratio is an index indicating a characteristic of the particle shape. When a cumulative volume distribution is calculated for any 100 or more particles relative to the aspect ratio of particles, the aspect ratio corresponding to cumulative volume 50% is defined as the mean aspect ratio = AR50; the aspect ratio corresponding to cumulative volume 10%, AR10; and the aspect ratio corresponding to cumulative volume 90%, AR90.

The results are shown in Table 1.

[Table 1]

|  | Alumina powder | Non-porosis index ($\mu m^3$) | Pore diameter by mercury penetration ($\mu m$) | Resistance of the upper layer (functional layer) ($10^4$ $m^2$ s Pa mol$^{-1}$) |
|---|---|---|---|---|
| Example 1 | CR-6 | 0.038 | 0.22 | 6.2 |
| Example 2 | CR-15 | 0.016 | 0.22 | 6.4 |
| Example 3 | alumina 1 | 0.012 | 0.11 | 6.6 |
| Comparative Example 1 | AKP-20 | 0.086 | 0.22 | 7.5 |

The acceptance rates of the test according to the above "(3) Method for evaluating defects" were, in Example 1, 2/3 (two out of three samples were acceptable, hereinafter, the same applies); in Example 2, 3/3; and in Comparative Example 1, 0/3.

Properties of the alumina powders measured in the above (6) and (7) are as indicated in the following Table 2.

[Table 2]

| Alumina powder | Aspect ratio | | | Diameter corresponding to cumulative 50% based on volume ($\mu m$) |
|---|---|---|---|---|
|  | AR50 corresponding to cumulative 50% | AR90 corresponding to cumulative 90% | (AR90-AR10)/AR50 |  |
| CR-6 | 2.09 | 3.07 | 0.70 | 0.68 |
| CR-15 | 2.14 | 3.21 | 0.77 | 1.0 |
| Alumina 1 | 2.11 | 3.18 | 0.74 | 0.5 |
| AKP-20 | 2.16 | 2.98 | 0.65 | 0.42 |

The $D_{LD-MAX}$ of the first porous layer (substrate A-13) was 11 $\mu m$. The $D_{LD-MAX}$ of the second porous layer was, in Example 1, 0.22 $\mu m$; in Example 2, 0.22 $\mu m$; in Example 3, 0.11 $\mu m$, and in Comparative Example 1, 0.22 $\mu m$. The thickness of the second porous layer was, in Example 1, 25 $\mu m$; in Example 2, 29 $\mu m$; in Example 3, 30 $\mu m$, and in Comparative Example 1, 19 $\mu m$.

In the FIB-SEM observation, it was confirmed that in all the Examples and Comparative Example, pores spread three-dimensionally.

**Claims**

1. A porous ceramic layer, comprising ceramic trabeculae and voids,
   wherein the porous ceramic layer has a non-porosis index, as represented by a Trabecular star volume (V*t) being a mean volume of volumes of the ceramic trabeculae in the range of from any point therein omnidirectionally to ends thereof, of 0.075 $\mu m^3$ or lower.

2. The porous ceramic layer according to claim 1,
   wherein the non-porosis index is 0.010 $\mu m^3$ or higher.

3. A porous ceramic layered body, comprising a first porous layer and a second porous layer layered on a surface of the first porous layer,

   wherein a pore diameter $D_{LD-max}$ (1) at which a value of a log differential pore volume measured in the pore diameter range of 0.0036 to 200 $\mu m$ of the first porous layer becomes maximum is larger than a pore diameter $D_{LD-max}$ (2) at which a value of a log differential pore volume measured in the pore diameter range of 0.0036 to 200 $\mu m$ of the second porous layer becomes maximum;
   both the first porous layer and the second porous layer comprise a metal oxide; and
   the second porous layer is the porous ceramic layer according to claim 1 or 2.

4. The porous ceramic layered body according to claim 3, wherein the metal oxide comprises alumina.

5. The porous ceramic layered body according to claim 3, wherein the porous ceramic layered body is tubular or monolithic.

6. A separation membrane, comprising the porous ceramic layered body according to claim 3.

7. The separation membrane according to claim 6,
   wherein the second porous layer and a functional layer are layered.

# Figure 1

## INTERNATIONAL SEARCH REPORT

| International application No. |
|---|
| **PCT/JP2024/005267** |

**A. CLASSIFICATION OF SUBJECT MATTER**

*C04B 38/00*(2006.01)i; *B01D 69/00*(2006.01)i; *B01D 69/10*(2006.01)i; *B01D 69/12*(2006.01)i; *B01D 71/02*(2006.01)i; *C04B 35/111*(2006.01)i; *C04B 41/85*(2006.01)i
FI: C04B38/00 303Z; B01D69/10; B01D69/12; B01D71/02; B01D69/00; C04B35/111; C04B41/85 C

According to International Patent Classification (IPC) or to both national classification and IPC

**B. FIELDS SEARCHED**

Minimum documentation searched (classification system followed by classification symbols)

C04B38/00-C04B38/10;B01D39/20;B01D69/12,B01D71/02;A61F2/28-A61F2/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | JP 2021-172540 A (SUMITOMO CHEMICAL COMPANY, LIMITED) 01 November 2021 (2021-11-01)<br> claims, paragraphs [0039]-[0052] | 1-7 |
| Y | | 1-7 |
| Y | JP 2021-61143 A (SUMITOMO CHEMICAL COMPANY, LIMITED) 15 April 2021 (2021-04-15)<br> paragraph [0176] | 1-7 |
| Y | WO 2021/039673 A1 (ZEON CORPORATION) 04 March 2021 (2021-03-04)<br> paragraph [0084] | 1-7 |
| Y | JP 8-323123 A (MATSUSHITA ELECTRIC INDUSTRIAL CO., LTD.) 10 December 1996 (1996-12-10)<br> paragraph [0043] | 1-7 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **26 March 2024** | **16 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

# EP 4 678 618 A1

## INTERNATIONAL SEARCH REPORT

International application No.

**PCT/JP2024/005267**

### C. DOCUMENTS CONSIDERED TO BE RELEVANT

| Category* | Citation of document, with indication, where appropriate, of the relevant passages | Relevant to claim No. |
|---|---|---|
| Y | JP 2020-500588 A (KARL, Christoph) 16 January 2020 (2020-01-16)<br>claims, paragraphs [0032], [0041], [0049], [0052] | 1-7 |
| Y | JP 11-112877 A (FUJI PHOTO FILM CO., LTD.) 23 April 1999 (1999-04-23)<br>paragraph [0010], fig. 3 | 1-7 |
| Y | JP 2011-79732 A (NGK INSULATORS LTD.) 21 April 2011 (2011-04-21)<br>claims, paragraphs [0025]-[0047] fig. 9 | 1-7 |
| A | US 4356215 A (COMMISSARIAT A L'ENERGIE ATOMIQUE) 26 October 1982<br>(1982-10-26) | 1-7 |
| A | JP 2020-54985 A (DENSO CORPORATION) 09 April 2020 (2020-04-09) | 1-7 |
| A | US 2003/0143130 A1 (C.R.F. SOCIETA CONSORTILE PER AZIONI) 31 July 2003<br>(2003-07-31) | 1-7 |
| A | JP 7-330441 A (KABUSHIKI KAISHA TOYOTA CHUO KENKYUSHO) 19 December<br>1995 (1995-12-19) | 1-7 |

Form PCT/ISA/210 (second sheet) (July 2022)

15

### INTERNATIONAL SEARCH REPORT
**Information on patent family members**

International application No.

**PCT/JP2024/005267**

| Patent document cited in search report | | | Publication date (day/month/year) | Patent family member(s) | | | Publication date (day/month/year) |
|---|---|---|---|---|---|---|---|
| JP | 2021-172540 | A | 01 November 2021 | US 2023/0150893 A1 claims, paragraphs [0053]-[0068] CN 115427375 A | | | |
| JP | 2021-61143 | A | 15 April 2021 | (Family: none) | | | |
| WO | 2021/039673 | A1 | 04 March 2021 | US 2022/0320605 A1 paragraph [0191] CN 113892202 A | | | |
| JP | 8-323123 | A | 10 December 1996 | (Family: none) | | | |
| JP | 2020-500588 | A | 16 January 2020 | US 2019/0290440 A1 claims, paragraphs [0044], [0053], [0061], [0064] | | | |
| JP | 11-112877 | A | 23 April 1999 | US 6449502 B1 column 1, line 64 to column 2, line 21, fig. 3 | | | |
| JP | 2011-79732 | A | 21 April 2011 | (Family: none) | | | |
| US | 4356215 | A | 26 October 1982 | FR 2463636 A | | | |
| JP | 2020-54985 | A | 09 April 2020 | US 2020/0101442 A1 CN 110966065 A | | | |
| US | 2003/0143130 | A1 | 31 July 2003 | WO 2000/069542 A1 | | | |
| JP | 7-330441 | A | 19 December 1995 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007283219 A
- WO 2017169591 A
- JP 2023036852 A